# FASCICULE DE BREVET EUROPEEN

(11) **EP 2 880 348 B1**
(45) Date de publication et mention de la délivrance du brevet: **01.06.2016**
(21) Numéro de dépôt: 13747995.2
(22) Date de dépôt: 31.07.2013
(51) Int. Cl.: B32B 1/08, B32B 27/32, B29L 23/00, B29L 9/00, F16L 11/08

(54) **CONDUITE FLEXIBLE SOUS MARINE COMPRENANT UNE COUCHE COMPRENANT UN POLYÉTHYLÈNE À RÉSISTANCE THERMIQUE ACCRUE**
FLEXIBLE UNTERWASSER-ROHRLEITUNG ENTHALTEND EINE SCHICHT ENTHALTEND POLYETHYLEN MIT VERBESSERTER WÄRMEBESTÄNDIGKEIT
FLEXIBLE UNDERWATER PIPE INCLUDING A LAYER INCLUDING A POLYETHYLENE HAVING ENHANCED HEAT RESISTANCE

(30) Priorité: 03.08.2012 FR 1257591
(43) Date de publication de la demande: 10.06.2015
(73) Titulaire: Technip France, 92400 Courbevoix (FR)
(72) Inventeur: TRONC, Frédéric, 76480 Saint Pierre de Varengeville (FR)
(74) Mandataire: Blot, Philippe Robert Emile
(86) Numéro de dépôt international: PCT/EP2013/066060
(87) Numéro de publication internationale: WO 2014/020053

(56) Documents cités:
- EP-A1- 1 652 664
- WO-A1-2006/090092
- WO-A1-2006/120320
- WO-A1-2010/096935
- WO-A1-2012/028262
- WO-A1-2012/030221
- DATABASE WPI Week 201136 Thomson Scientific, London, GB; AN 2011-F46302 XP002694989, -& CN 201 795 184 U (ZHEJIANG GAOFENG HOLDING GROUP CORP) 13 avril 2011 (2011-04-13)
- DATABASE WPI Week 200821 Thomson Scientific, London, GB; AN 2008-C81399 XP002694990, -& CN 101 045 354 A (LIN S) 3 octobre 2007 (2007-10-03)
- DATABASE WPI Week 201164 Thomson Scientific, London, GB; AN 2011-K33136 XP002694991, -& CN 102 128 317 A (GUANGDONG LIANSU TECHNOLOGY IND CO LTD) 20 juillet 2011 (2011-07-20)

## Description

La présente invention concerne une conduite flexible sous-marine destinée au transport des hydrocarbures en eau profonde.

Les conduites flexibles de transport des hydrocarbures comportent généralement, de l'extérieur vers l'intérieur de la conduite :
- une gaine polymérique externe d'étanchéité pour protéger l'ensemble de la conduite et notamment pour empêcher l'eau de mer de pénétrer dans son épaisseur,
- des nappes d'armures de traction,
- une voûte de pression,
- une gaine polymérique interne d'étanchéité, et
- éventuellement une carcasse métallique (figure).

Si la conduite comprend une carcasse métallique, elle est dite à passage non lisse ("rough-bore" en langue anglaise). Si la conduite est exempte de carcasse métallique, elle est dite à passage lisse ("smooth-bore" en langue anglaise). Généralement, pour le transport d'hydrocarbures, une conduite comportant une carcasse est préférée, alors qu'une conduite exempte de carcasse sera adaptée pour le transport d'eau et/ou de vapeur d'eau sous pression.

La carcasse métallique et la voûte de pression sont constituées d'éléments longitudinaux enroulés à pas court, et elles confèrent à la conduite sa résistance aux efforts radiaux tandis que les nappes d'armures de traction sont constituées de fils métalliques enroulés selon des pas longs pour reprendre les efforts axiaux.

La nature, le nombre, le dimensionnement et l'organisation des couches constituant les conduites flexibles sont essentiellement liés à leurs conditions d'utilisation et d'installation. Les conduites peuvent comprendre des couches supplémentaires à celles susmentionnées, par exemple une ou plusieurs couche(s) polymérique(s) intermédiaire(s) (dite « gaine polymérique intermédiaire ») qui sont situées entre deux couches adjacentes précitées et qui participent à l'isolation de la conduite flexible.

Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25°et 55°pour les nappes d'armures.

Ces conduites flexibles conviennent notamment au transport de fluides, notamment d'hydrocarbures dans les fonds marins et ce, à de grandes profondeurs. Plus précisément elles sont dites de type non lié ("unbonded" en anglais) et elles sont ainsi décrites dans les documents normatifs publiés par l'American Petroleum Institute (API), API 17J (3ème édition - 1er janvier 2009) et API RP 17B (3ème édition - mars 2002).

Les conduites flexibles peuvent être utilisées à grande profondeur, typiquement jusqu'à 2500 mètres de profondeur et avantageusement jusqu'à 3000 mètres. Elles permettent le transport de fluides, notamment d'hydrocarbures, ayant une température atteignant typiquement 130°C et pouvant même dépasser les 150°C et une pression interne pouvant atteindre 1000 bars, voire 1500 bars.

Le matériau constitutif de la gaine polymérique d'étanchéité doit être stable chimiquement et capable de résister mécaniquement au fluide transporté et à ses caractéristiques (composition, température et pression). Le matériau doit combiner des caractéristiques de ductilité, de résistance au temps (généralement, la conduite doit avoir une durée de vie d'au moins 20 ans), de résistance mécanique, à la chaleur et à la pression. Le matériau doit notamment être inerte chimiquement vis-à-vis des composés chimiques constituant le fluide transporté. Typiquement, les hydrocarbures transportés comprennent du pétrole brut, de l'eau et des gaz sous pression.

Divers matériaux polymères sont utilisés en tant que gaine polymérique interne, intermédiaire ou externe d'étanchéité, en particulier le polyéthylène (PE), réticulé ou non. Le polyéthylène peut notamment être du polyéthylène haute densité (PEHD).

Par exemple, la demande de brevet CA 2 064 226 (COFLEXIP) décrit une conduite tubulaire flexible pour le transport d'hydrocarbures comprenant une gaine d'étanchéité interne comprenant un polyéthylène greffé silane et réticulé par hydrolyse et couplage des silanes. La demande WO 03/078134 (NKT FLEXIBLES) décrit une conduite tubulaire flexible pour le transport d'hydrocarbures comprenant une gaine d'étanchéité comprenant un polyéthylène réticulé par traitement de peroxydes à des rayonnements électromagnétiques. La demande WO 2004/065092 (WELLSTREAM INTERNATIONAL LIMITED) décrit une conduite tubulaire flexible pour le transport d'hydrocarbures comprenant une gaine d'étanchéité comprenant un polyéthylène réticulé par irradiation par faisceaux d'électrons.

Néanmoins, une gaine à base de polyéthylène peut être sujette au phénomène de cloquage (« blistering » en anglais). Dans une conduite flexible, la gaine d'étanchéité en matériau polymère est utilisée pour transporter des fluides composés de pétrole brut, d'eau et de gaz sous pression et en température. Dans ces conditions d'utilisation, le matériau polymère de la gaine d'étanchéité absorbe les gaz contenus dans le fluide pétrolier en fonction de leur nature chimique (via leur coefficient de solubilité) et de la pression partielle de chacun d'eux. Le temps de saturation du polymère, la mise en équilibre du système, dépend quant à lui des coefficients de diffusion et donc essentiellement de la température. Si la pression dans la conduite flexible vient à diminuer, les gaz absorbés tendent à s'extraire du polymère afin de maintenir l'équilibre entre les concentrations interne et externe. Si la rupture de l'équilibre est très rapide, plus rapide que la vitesse de diffusion des gaz hors du polymère (comme dans le cas d'arrêt de production ou "shut-down"), le système n'est plus à l'équilibre. La sursaturation de gaz dans la gaine de polymère conduit à des gradients de concentration en gaz et de température qui peut engendrer l'expansion plus ou moins importante et brutale des gaz (« rapid gas décompression » en anglais) pouvant générer des endommagements irréversibles tels que l'apparition de cloques ou de fissures ou encore la formation d'une microporosité uniformément répartie dans l'épaisseur du matériau. Ainsi, l'apparition de cloques est due au piégeage de gaz solubles au sein de la gaine ou à la décompression trop rapide de la conduite ne permettant pas au gaz de diffuser hors de la gaine. Ce phénomène de cloquage peut être catastrophique pour la gaine d'étanchéité, et donc pour la conduite flexible qui la contient, puisqu'il peut conduire à la perte de sa fonction d'étanchéité.

Typiquement, le phénomène de cloquage est observé pour une gaine d'étanchéité à base de polyéthylène, réticulé ou non, au contact d'un fluide pétrolier comportant des gaz corrosifs pouvant diffuser au sein de la gaine, sous pression élevée (supérieur à 200 bars) à une température de l'ordre de 60°C pour les polyéthylènes non réticulés, et 90°C pour les polyéthylènes réticulés. Ainsi, pour garantir une durée de vie d'au moins 20 ans de la conduite flexible, pour une pression de 200 bars, une conduite flexible dont une gaine d'étanchéité est en polyéthylène non réticulé ou réticulé ne peut être utilisée à des températures respectivement supérieures à 60°C et 90°C.

Par conséquent, des matériaux polymériques alternatifs au polyéthylène ont été développés pour les gaines polymériques interne, intermédiaire ou externe d'étanchéité, notamment :
- le polyamide (PA), notamment le polyamide 11. Contrairement au polyéthylène, le polyamide possède une bonne résistance au cloquage, ainsi qu'une faible tendance au gonflement lorsqu'il est au contact du fluide pétrolier. Le polyamide est généralement utilisé pour des conditions de transport d'hydrocarbures pour lesquelles la pression est élevée et où la température peut s'élever jusqu'à 110°C_{.}

En revanche, un des inconvénients du polyamide est qu'il a tendance à s'hydrolyser en présence d'eau (souvent contenu dans les bruts de production). L'hydrolyse est rapide lorsqu'il est soumis à des températures (de l'ordre de 110°C et plus) et à des valeurs de pH élevées (pH supérieur à 7). Un autre inconvénient est son coût d'achat qui est sensiblement plus important que celui du polyéthylène.
- le polyfluorure de vinylidène (PVDF) (qui contient plus ou moins de plastifiant suivant le grade utilisé) possède une très bonne inertie chimique. Les gaines à base de PVDF peuvent supporter des pressions en service élevées ainsi que des températures pouvant atteindre 130 à 150°C.

Son inconvénient majeur reste son prix, bien plus élevé que celui du polyéthylène ou du polyamide.

Ainsi, les gaines polymériques interne, intermédiaire ou externe d'étanchéité à base de polyamide ou de polyfluorure de vinylidène subissent moins de phénomène de cloquage que des gaines à base de polyéthylène, réticulé ou non, mais elles sont plus coûteuses, et plus sujettes à une dégradation par hydrolyse dans le cas d'une gaine à base de polyamide.

La demande WO 2010/096935 décrit une conduite flexible comprenant de l'intérieur vers l'extérieur : une couche interne qui peut être à base de HDPE-RT, une première couche de renfort, une seconde couche de renfort et une couche externe.

Un des objectifs de la présente invention est de fournir une conduite flexible sous marine pour le transport d'hydrocarbures dont la(es) gaine(s) polymérique(s) interne, intermédiaire et/ou externe d'étanchéité subi(ssen)t moins, voire pas du tout, de phénomène de cloquage, et pour des températures et/ou pressions plus élevées, que des conduites comprenant des gaines à base de polyéthylène réticulé ou non, tout en conservant les propriétés mécaniques de(s) la gaine(s).

A cet effet, selon un premier objet, l'invention concerne une conduite flexible sous marine destinée au transport d'hydrocarbures, comprenant une pluralité de couches dont au moins une couche comprend un polyéthylène à résistance thermique accrue (PE-RT).

L'inventeur a en effet découvert qu'une couche comprenant un polyéthylène à résistance thermique accrue subit moins, voire pas du tout, de phénomène de cloquage qu'une couche à base de polyéthylène, réticulé ou non, utilisé actuellement comme gaine d'étanchéité d'une conduite flexible, et ce même à des températures et/ou pressions plus élevées. Une telle couche est donc particulièrement adaptée pour être utilisée comme gaine d'étanchéité dans une conduite flexible.

Les polyéthylènes à résistance thermique accrue ou polyéthylènes à résistance thermique majorée (« polyethylene raised temperature » ou « polyethylene of raised temperature » ou « polyethylene of raised temperature resistance» PE-RT en anglais) sont définis dans les normes ASTM F2769-10 révisée en 2010, ASTM F2623 révisée en 2008 ou les standards ISO 1043-1 révisé en 2011, ISO 24033 révisée en 2009 et ISO 22391 révisé en 2009 et par le standard ISO 15494 révisée en 2003 pour les applications. Des polyéthylènes à résistance thermique accrue de type I ou de type II peuvent être utilisés dans la couche de la conduite, ceux de type II (de densité plus élevée) étant préférés car ils résistent généralement mieux à de haute pressions et/ou températures.

Les polyéthylènes à résistance thermique accrue sont des polyéthylènes de haute densité (HDPE - « high density polyethylene» en anglais) obtenus par polymérisation en présence de catalyseurs spécifiques d'éthylène et d'un ou plusieurs co-monomères α-oléfine comportant au moins trois atomes de carbone, généralement de 3 à 14 atomes de carbone, préférentiellement de 4 à 12 atomes de carbone, plus préférentiellement de 6 à 10 atomes de carbone et encore plus préférentiellement de 6 à 8 atomes de carbone (ce qui conduit à des polyéthylènes à résistance thermique accrue dont les chaînes latérales ont généralement de 1 à 12 atomes de carbone, préférentiellement de 2 à 10 atomes de carbone, plus préférentiellement de 4 à 8 atomes de carbone et encore plus préférentiellement de 4 à 6 atomes de carbone). Ainsi les co-monomères polymérisés en présence de l'éthylène peuvent être le propylène, le 1-butène, l'isobutylène, le 4-méthyl-1-pentène, le 1-hexène, le 1-octène, le 1-décène. La couche de la conduite flexible selon l'invention comprend typiquement un polyéthylène à résistance thermique accrue obtenu par polymérisation d'éthylène et d'une α-oléfine choisie parmi le 1-butène, le 1-hexène et le 1-octène, de préférence le 1-hexène et le 1-octène. De tels polyéthylènes à résistance thermique accrue ont donc des chaînes latérales éthyle, n-butyle ou n-hexyle, de préférence n-butyle ou n-hexyle.

Les polyéthylènes à résistance thermique accrue ne sont pas des polyéthylènes réticulés.

Des procédés de préparation de polyéthylène à résistance thermique accrue, mettant en oeuvre des catalyseurs spécifiques, sont connus de la littérature, et sont par exemple décrits dans les demandes de brevet EP 0 416 815, WO 94/03509, EP 0 100 879. L'utilisation de catalyseurs dédiés permet d'obtenir des copolymères issus des monomères éthylène / α-oléfine et dont les structures moléculaires (distribution contrôlée du co-monomère) et cristallines leur confèrent des performances élevées en termes de résistance à la pression hydrostatique jusqu'à des températures élevées pour des polyoléfines non réticulées. Ces performances font que les polyéthylènes à résistance thermique accrue sont utilisés principalement dans les canalisations pour le transport d'eau froide et chaude sous pression, aussi bien pour des applications domestiques qu'industrielles.

Typiquement, les polyéthylènes à résistance thermique accrue utilisés dans la couche de la conduite flexible selon l'invention ont :
- une densité (selon ASTM D1505 révisée en 2010 ou ISO 1183 révisée en 2012) comprise entre 0,930 g/cm³ et 0,965 g/cm³, préférentiellement entre 0,935 g/cm³ et 0,960 g/cm³ et encore plus préférentiellement entre 0,940 g/cm³ et 0,955 g/cm³,
- un melt index (selon ASTM D1238 révisée en 2010 ou ISO 1133 révisée en 2011) mesuré à 190°C sous une masse de 2,16kg compris entre 0,1 g/10 minutes et 15 g/10 minutes, préférentiellement entre 0,1 g/10 minutes et 5 g/10 minutes et de manière encore plus préférentielle entre 0,1 g/10 minutes et 1,5 g/10 minutes,
- une force de traction au seuil (« tensile yield strength » en anglais) (selon ASTM D638 révisée en 2010 ou ISO 527-2 révisée en 2012) comprise entre 15 et 35 MPa, préférentiellement entre 20 et 30 MPa et encore plus préférentiellement entre 25 et 30 MPa,
- un allongement à la rupture (selon ASTM D638 révisée en 2010 ou ISO 527-2 révisée en 2012) au moins supérieur à 50%, de manière préférentielle supérieur à 300% et de manière encore plus préférentielle supérieure ou égale à 500%.

Les polyéthylènes à résistance thermique accrue utilisables dans la couche de la conduite flexible selon l'invention sont commercialisés notamment par Dow Chemical (Dowlex 2377, Dowlex 2388, Dowlex 2344, DGDA-2399), par Total Petrochemical (XSene XRT70), par Chevron Phillips (Marlex HP076, HHM4903), par Exxon Mobil (HD6704) et par Lyondellbasell (Hostalen 4731 B).

Les polyéthylènes à résistance thermique accrue utilisés dans la couche de la conduite flexible selon l'invention dont :
- le melt index (selon ASTM D1238 révisée en 2010 ou ISO 1133 révisée en 2011) mesuré à 190°C sous une masse de 5,0 kg est inférieur à 2,0 g/10 min, et
- la densité (selon ASTM D1505 révisée en 2010 ou ISO 1183 révisée en 2012) est supérieure à 0,945 g/cm³,
sont particulièrement préférés, car la couche comprenant un tel polyéthylène à résistance thermique accrue résiste particulièrement bien au phénomène de cloquage, et ce même aux pressions et températures élevées rencontrées lors de l'utilisation d'une conduite flexible comprenant une telle couche pour le transport sous marin d'hydrocarbures. Typiquement, une telle couche peut en effet résister au phénomène de cloquage à des pressions supérieures à 400 bars et des températures supérieures à 90°C. Les inventeurs ont mis en évidence que des cloques apparaissent généralement à des températures et pressions plus faibles lorsqu'une couche comprenant un polyéthylène à résistance thermique accrue ne présentant pas ces caractéristiques de densité et/ou de melt index est utilisée.

De préférence, les forces de traction au seuil et les allongements à la rupture de ces polyéthylènes à résistance thermique accrue sont conformes à ceux décrits ci-dessus.

Parmi les polyéthylènes à résistance thermique accrue de densité supérieure à 0,945 g/cm³, on préfère ceux dont le melt index (selon ASTM D1238 révisée en 2010 ou ISO 1133 révisée en 2011) mesuré à 190°C sous une masse de 5,0 kg est inférieur à 1,0 g/10 min car la résistance au phénomène de cloquage d'une couche les comprenant est accentuée. Généralement, le melt index mesuré à 190°C sous une masse de 2,16 kg est alors inférieur à 0,25 g/10 min et/ou le melt index mesuré à 190°C sous une masse de 21,6 kg est inférieur à 20 g/10 min.

Ces polyéthylènes à résistance thermique accrue sont commercialisés notamment par Dow Chemical (DGDA-2399), par Total Petrochemical (XSene XRT70), par Chevron Phillips (HHM-TR457) et par Lyondellbasell (Hostalen 4731 B).

La couche comprenant un polyéthylène à résistance thermique accrue de la conduite selon l'invention comprend typiquement :
- une matrice polymérique, et
- éventuellement des composants dispersés de façon discontinue dans la matrice polymérique.

Par « matrice polymérique », on entend la phase continue polymérique qui forme la couche. La matrice polymérique est une matrice continue. La couche peut éventuellement comprendre des composants dispersés de façon discontinue dans la matrice polymérique, mais qui ne font pas partie de la matrice polymérique. De tels composants peuvent par exemple être des charges telles que des fibres.

La matrice polymérique de la couche est généralement obtenue par extrusion d'un ou de plusieurs polymères (qui formeront la matrice polymérique) et éventuellement d'additifs (mélange maître). Lors de l'extrusion, certains additifs sont incorporés dans la matrice polymérique, alors que d'autres ne se mélangent pas avec les polymères formant la matrice polymérique et se dispersent de façon discontinue dans la matrice polymérique, pour former des composants dispersés de façon discontinue dans la matrice polymérique.

Selon une première alternative, la conduite selon l'invention comprend au moins une couche dont la matrice polymérique comprend un polyéthylène à résistance thermique accrue.

Selon cette alternative, la couche dont la matrice polymérique comprend un polyéthylène à résistance thermique accrue est généralement obtenue par extrusion d'un ou de plusieurs polymères (qui formera(ont) la matrice polymérique), l'un d'eux étant du polyéthylène à résistance thermique accrue, et éventuellement en présence d'additifs.

Les composants dispersés de façon discontinue dans la matrice polymérique peuvent éventuellement comprendre des polymères, par exemple du polyéthylène à résistance thermique accrue. Cela étant, une conduite flexible :
- comprenant une couche comprenant un composant dispersé de façon discontinue dans la matrice polymérique (notamment des charges telles que des fibres) comprenant ou composé de polyéthylène à résistance thermique accrue,
- mais dont la matrice polymérique est exempte de polyéthylène à résistance thermique accrue,
ne répond pas à la définition d'une conduite comprenant au moins une couche dont la matrice polymérique comprend un polyéthylène à résistance thermique accrue, telle que définie dans cette première alternative.

Selon une deuxième alternative, la conduite selon l'invention comprend au moins une couche comprenant un composant dispersé de façon discontinue dans la matrice polymérique, ledit composant comprenant un polyéthylène à résistance thermique accrue.

Selon cette deuxième alternative, un composant dispersé de façon discontinue dans la matrice polymérique de la couche comprend un polyéthylène à résistance thermique accrue. Le composant peut être une charge telle qu'une fibre. Ce composant comprenant le polyéthylène à résistance thermique accrue peut éventuellement servir de support de catalyseur. A titre illustratif, lorsque la matrice polymérique de la couche comprend un polymère réticulé, le composant comprenant le polyéthylène à résistance thermique accrue peut servir de support du catalyseur de réticulation de ce polymère. Le composant comprenant le polyéthylène à résistance thermique accrue est généralement un des additifs du mélange maitre utilisé lors de l'extrusion. Selon cette deuxième alternative, la matrice polymérique de la couche peut être exempte de polyéthylène à résistance thermique accrue.

Selon une troisième alternative, la conduite selon l'invention comprend au moins une couche comprenant un composant dispersé de façon discontinue dans la matrice polymérique, ledit composant comprenant un polyéthylène à résistance thermique accrue et dont la matrice polymérique comprend un polyéthylène à résistance thermique accrue.

Selon cette troisième alternative, le polyéthylène à résistance thermique accrue est donc présent à la fois dans la matrice polymérique et dans un composant dispersé de façon discontinue dans la matrice polymérique.

Dans un mode de réalisation, dans la conduite flexible selon l'invention, la couche comprend, en plus du polyéthylène à résistance thermique accrue, une autre polyoléfine. Typiquement, c'est la matrice polymérique de la couche qui comprend, en plus du polyéthylène à résistance thermique accrue, au moins une autre polyoléfine. Par « autre polyoléfine », on entend que la polyoléfine n'est pas un polyéthylène à résistance thermique accrue. Le polyéthylène à résistance thermique accrue peut alors être le polymère majoritaire (dans la couche de la conduite, le rapport massique entre le polyéthylène à résistance thermique accrue et la somme du polyéthylène à résistance thermique accrue et de la polyoléfine étant alors supérieur à 50%) ou minoritaire (dans la couche de la conduite, le rapport massique entre le polyéthylène à résistance thermique accrue et la somme du polyéthylène à résistance thermique accrue et de la polyoléfine étant alors inférieur à 50%).

L'autre polyoléfine de la couche est notamment un polyéthylène à haut poids moléculaire, typiquement à très haut poids moléculaire, de préférence à ultra haut poids moléculaire.

Au sens de la présente demande, un polyéthylène :
- à haut poids moléculaire (« high molecular weight polyethylene » (HMWPE ou HMwPE) en anglais) a une masse moléculaire moyenne en masse (Mw) supérieure à 400 000 g/mol,
- à très haut poids moléculaire (« very high molecular weight polyethylene » (VHMWPE ou VHMwPE) en anglais) a une masse moléculaire moyenne en masse (Mw) supérieure à 500 000 g/mol (par exemple le polyéthylène haute densité GHR8110 de Ticona dont la masse moléculaire moyenne en masse (Mw) est de l'ordre de 600 000 g/mol), de préférence supérieure à 1 000 000 g/mol,
- à ultra haut poids moléculaire (« ultra high molecular weight polyethylene » (UHMWPE ou UHMwPE) en anglais) a une masse moléculaire moyenne en masse (Mw) supérieure à 3 000 000 g/mol.

Ces polyéthylènes à haut poids moléculaire / très haut poids moléculaire / ultra haut poids moléculaire sont disponibles commercialement.

Généralement, dans la conduite flexible, la couche comprenant un polyéthylène à résistance thermique accrue comprend des additifs, tels que antioxydants, anti-UV, lubrifiants et autres charges usuellement utilisées dans les thermoplastiques.

La conduite flexible selon l'invention peut comprendre une couche constituée de :
- un polyéthylène à résistance thermique accrue,
- éventuellement un polyéthylène à haut poids moléculaire, et
- éventuellement des additifs, tels que des antioxydants, des anti-UV, des lubrifiants et des charges.

Une conduite flexible comprenant une couche comprenant un polyéthylène à résistance thermique accrue présente les avantages suivants :
- la couche comprenant un polyéthylène à résistance thermique accrue résiste mieux au cloquage qu'une couche comprenant un polyéthylène classique, réticulé ou non. Par conséquent, une conduite flexible comprenant une couche comprenant un polyéthylène à résistance thermique accrue peut être utilisée à des températures et/ou pressions supérieures à celles utilisées pour une conduite flexible comprenant une couche à base de polyéthylène non réticulé ou à base de polyéthylène réticulé.
   - Par exemple, l'inventeur a mis en évidence qu'à une température de 60°C, une conduite flexible comprenant une couche comprenant un polyéthylène à résistance thermique accrue peut être utilisée à des pressions supérieures qu'une conduite flexible comprenant une couche comprenant un polyéthylène non réticulé. De plus, une conduite flexible comprenant une couche comprenant un polyéthylène à résistance thermique accrue peut être utilisée à des températures supérieures à 60°C, ce qui n'est généralement pas le cas d'une conduite flexible comprenant une couche comprenant un polyéthylène non réticulé pour laquelle le phénomène de cloquage est observé à 60°C à 105 bars pour le transport d'hydrocarbures liquides et à 60°C à 210 bars dans le cas de transport de gaz sec.
   - De même, l'inventeur a mis en évidence qu'à une température de 90°C, une conduite flexible comprenant une couche comprenant un polyéthylène à résistance thermique accrue peut être utilisée à des pressions supérieures qu'une conduite flexible comprenant une couche comprenant un polyéthylène réticulé.
- La couche comprenant un polyéthylène à résistance thermique accrue est moins coûteuse qu'une couche à base de PVDF ;
- La couche comprenant un polyéthylène à résistance thermique accrue présente une meilleure tenue à l'abrasion qu'une couche à base de polyéthylène ou de polymère thermoplastique. Les tenues à l'abrasion d'une couche comprenant un polyéthylène à résistance thermique accrue et d'une couche à base de polyamide 11 sont comparables, mais le coût de la couche comprenant un polyéthylène à résistance thermique accrue est moindre.

La conduite flexible sous marine selon l'invention comprend une pluralité de couche, c'est-à-dire au moins deux couches. Typiquement, la conduite flexible sous marine selon l'invention comprend, de l'extérieur vers l'intérieur :
- une gaine polymérique externe d'étanchéité,
- au moins une nappe d'armures de traction (généralement deux),
- une voûte de pression,
- une gaine polymérique interne d'étanchéité,
- éventuellement une carcasse métallique,
et éventuellement une ou plusieurs gaine(s) polymérique(s) d'étanchéité intermédiaire(s) entre deux couches adjacentes,
étant entendu qu'au moins l'une de ces couches comprend un polyéthylène à résistance thermique accrue.
La couche comprenant un polyéthylène à résistance thermique accrue est au moins l'une des couches (généralement une gaine polymérique) de la conduite flexible.

La conduite flexible sous marine selon l'invention peut comprendre d'autres couches en plus de celles susmentionnées. Par exemple, elle peut comprendre :
- une couche de maintien entre la gaine polymérique externe 10 et les nappes d'armures de traction 12 et 14, ou entre deux nappes d'armures de traction,
- et éventuellement une ou plusieurs couches anti-usure (" anti-wear layer " en anglais) en matériau polymérique en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO 2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

Dans une conduite flexible sous marine selon l'invention, la(es) couche(s) comprenant un polyéthylène à résistance thermique accrue peu(ven)t notamment être :
- la gaine polymérique interne d'étanchéité, et/ou
- une ou plusieurs gaine(s) polymérique(s) intermédiaire(s) d'étanchéité située(s) entre deux autres couches adjacentes, et/ou
- la gaine polymérique externe d'étanchéité.

Dans un mode de réalisation, la gaine polymérique intermédiaire d'étanchéité située entre deux autres couches adjacentes et comprenant un polyéthylène à résistance thermique accrue est une couche anti-usure.

En effet, comme explicité ci-dessus, la couche comprenant un polyéthylène à résistance thermique accrue subit moins de phénomène de cloquage est donc particulièrement adaptée à être utilisée comme gaine polymérique d'étanchéité (pour éviter d'une part la fuite dans la mer d'hydrocarbures à travers les fissures ou cloques formées et d'autre part l'entrée d'eau de mer dans la conduite).

De plus, comme explicité ci-dessus, une couche comprenant un polyéthylène à résistance thermique accrue présente une bonne résistance à l'abrasion, généralement meilleure que celle d'une couche en polyoléfine, et comparable à celle d'une couche en polyamide (plus coûteux que le PE-RT). Comme la résistance à l'abrasion est une propriété recherchée pour une gaine externe, la couche comprenant un polyéthylène à résistance thermique accrue est particulièrement adaptée pour être utilisée comme gaine externe d'étanchéité.

Par ailleurs, lorsque la conduite est utilisée à des températures inférieures à 60°C, sa gaine polymérique intermédiaire d'étanchéité est généralement en polyéthylène, mais pour des températures plus élevées, elle est généralement en PVDF, nettement plus coûteux. Ainsi lorsque la conduite doit être utilisée à des températures supérieures à 60°C, il est donc avantageux d'utiliser comme gaine polymérique intermédiaire une couche comprenant un polyéthylène à résistance thermique accrue (moins coûteux que le PVDF, mais dont les performances en tenue en température sont largement supérieures à un polyéthylène).

Par exemple, la conduite flexible selon l'invention peut comprendre, de l'extérieur vers l'intérieur :
- une gaine polymérique externe d'étanchéité,
- au moins une nappe d'armures de traction,
- une voûte de pression,
- une gaine polymérique interne d'étanchéité comprenant un polyéthylène à résistance thermique accrue,
- éventuellement une carcasse métallique.

Dans un deuxième exemple, la conduite flexible selon l'invention peut comprendre, de l'extérieur vers l'intérieur :
- une gaine polymérique externe d'étanchéité comprenant un polyéthylène à résistance thermique accrue,
- au moins une nappe d'armures de traction,
- une voûte de pression,
- une gaine polymérique interne d'étanchéité,
- éventuellement une carcasse métallique.

Dans un troisième exemple, la conduite flexible selon l'invention peut comprendre, de l'extérieur vers l'intérieur :
- une gaine polymérique externe d'étanchéité,
- au moins une nappe d'armures de traction,
- une voûte de pression,
- une gaine polymérique interne d'étanchéité
- éventuellement une carcasse métallique,
et une ou plusieurs gaine(s) polymérique(s) intermédiaire(s) d'étanchéité comprenant un polyéthylène à résistance thermique accrue entre deux couches adjacentes.

La conduite flexible selon l'invention peut également comprendre plusieurs couches (typiquement deux ou trois) comprenant un polyéthylène à résistance thermique accrue. Par exemple, la conduite flexible selon l'invention peut comprendre, de l'extérieur vers l'intérieur :
- une gaine polymérique externe d'étanchéité comprenant un polyéthylène à résistance thermique accrue,
- au moins une nappe d'armures de traction,
- une voûte de pression,
- une gaine polymérique interne d'étanchéité comprenant un polyéthylène à résistance thermique accrue,
- éventuellement une carcasse métallique.

Selon un deuxième objet, l'invention concerne un procédé de préparation de la conduite flexible sous marine précitée, comprenant les étapes suivantes :
a) extrusion pour former une couche comprenant un polyéthylène à résistance thermique accrue, l'extrusion étant éventuellement réalisée sur une autre couche,
b) éventuellement assemblage de la couche obtenue à l'étape a) avec au moins une autre couche.

L'extrusion d'une couche comprenant un polyéthylène à résistance thermique accrue est facile à mettre en oeuvre, alors que l'extrusion d'une couche en polyéthylène réticulé est généralement difficile. Ainsi, le procédé de préparation d'une conduite flexible comprenant une couche comprenant un polyéthylène à résistance thermique accrue est plus simple que le procédé de préparation d'une conduite flexible comprenant une couche comprenant un polyéthylène réticulé.

L'étape a) d'extrusion peut être réalisée par toute méthode connue de l'homme du métier, par exemple en utilisant une extrudeuse mono-vis ou bi-vis. Le polyéthylène à résistance thermique accrue peut facilement être coextrudé, contrairement à du polyéthylène réticulé.

La préparation de la couche comprenant un polyéthylène à résistance thermique accrue ne nécessite pas d'étape de réticulation (et aucun de dispositif de réticulation coûteux n'est nécessaire), au contraire de la préparation d'une couche en polyéthylène réticulé. Ainsi, le procédé de préparation d'une conduite flexible comprenant une couche comprenant un polyéthylène à résistance thermique accrue est plus rapide, plus simple et moins coûteux que le procédé de préparation d'une conduite flexible comprenant une couche comprenant un polyéthylène réticulé.

Lorsque la couche comprend plusieurs polymères (par exemple un polyéthylène à résistance thermique accrue et un polyéthylène de haut poids moléculaire), le mélange des deux polymères peut être réalisé avant ou pendant l'extrusion.

La couche obtenue à la fin de l'étape a) est typiquement tubulaire, a généralement un diamètre de 50 mm à 600 mm, de préférence de 50 à 400 mm, une épaisseur de 1 mm à 150 mm, préférentiellement de 40 à 100 mm et une longueur de 1 m à 10 km.

Le procédé comprend éventuellement l'étape b) d'assemblage de la couche obtenue lors de l'étape a) avec au moins une autre couche pour former la conduite sous marine flexible, notamment l'une des couches susmentionnées.

Les couches sont ainsi assemblées pour former une conduite flexible sous marine de type non liée ("unbonded" en langue anglaise), telle que décrite dans les documents normatifs publiés par l'American Petroleum Institute (API), API 17J et API RP 17B.

Selon une première alternative, l'extrusion de l'étape a) n'est pas réalisée sur une autre couche de la conduite flexible, mais de manière indépendante, et la couche obtenue à la fin de l'extrusion est alors rapportée et calandrée avec au moins une autre couche lors de l'étape b). Le procédé de préparation de la conduite flexible comprend alors les étapes de :
a) extrusion pour former une couche comprenant un polyéthylène à résistance thermique accrue,
b) assemblage de la couche obtenue à l'étape a) avec au moins une autre couche.

Par exemple, lorsque la couche comprenant un polyéthylène à résistance thermique accrue est la gaine polymérique interne d'étanchéité, la couche obtenue à la fin de l'étape a) est alors rapportée et calandrée typiquement avec une voûte de pression, au moins une nappe d'armures de traction (généralement deux nappes d'armures) et une gaine polymérique externe. Cet exemple permet notamment de réaliser des conduites flexibles à passage lisse (« Smooth bore » en anglais)

Selon une seconde alternative, l'extrusion de l'étape a) est réalisée sur une autre couche de la conduite flexible. Le procédé de préparation de la conduite flexible comprend alors les étapes de :
a) extrusion pour former une couche comprenant un polyéthylène à résistance thermique accrue, l'extrusion étant réalisée sur une autre couche,
b) éventuellement assemblage de la couche obtenue à l'étape a) avec au moins une autre couche.

Dans un premier mode de réalisation de cette seconde alternative, le procédé de préparation de la conduite flexible comprend les étapes de :
a) extrusion pour former une couche comprenant un polyéthylène à résistance thermique accrue, l'extrusion étant réalisée sur une autre couche,
b) assemblage de la couche obtenue à l'étape a) avec au moins une autre couche.

Par exemple, lorsque la couche comprenant un polyéthylène à résistance thermique accrue est la gaine polymérique interne d'étanchéité, l'extrusion est typiquement réalisée sur la carcasse, pour obtenir un ensemble (carcasse / couche comprenant un polyéthylène à résistance thermique accrue) qui sera alors rapporté et calandré avec au moins une autre couche lors de l'étape b), typiquement une voûte de pression, au moins une nappe d'armures de traction (généralement deux nappes d'armures) et une gaine polymérique externe. Cet exemple permet notamment de réaliser des conduites flexibles à passage non lisse (« Rough bore » en anglais).

De même, lorsque la couche comprenant un polyéthylène à résistance thermique accrue est une gaine polymérique intermédiaire, l'extrusion de la couche est typiquement réalisée sur l'ensemble de couches de la conduite qui sont plus internes que ladite gaine polymérique intermédiaire dans la conduite flexible obtenue par le procédé, pour obtenir un ensemble (gaine polymérique intermédiaire comprenant un polyéthylène à résistance thermique accrue / couches de la conduite qui sont plus internes que ladite gaine polymérique intermédiaire dans la conduite flexible obtenue par le procédé) qui sera alors rapporté et calandré avec la ou les autres couches de la conduite qui est(sont) plus externe(s) dans la conduite flexible obtenue par le procédé.

A titre illustratif, si la couche comprenant un polyéthylène à résistance thermique accrue est une gaine polymérique intermédiaire entre la voute de pression et une nappe d'armures de traction, l'extrusion de la couche serait typiquement réalisée sur l'ensemble voute de pression / gaine polymérique interne d'étanchéité / éventuelle carcasse (les couches étant listées de l'extérieur vers l'intérieur, l'extrusion étant réalisée sur la couche extérieure de cet ensemble, c'est-à-dire sur la voute de pression), pour obtenir un ensemble (gaine polymérique intermédiaire comprenant un polyéthylène à résistance thermique accrue / voute de pression / gaine polymérique interne d'étanchéité / éventuelle carcasse) qui sera alors rapporté et calandré avec au moins une nappe d'armures de traction (généralement deux nappes d'armure) et une gaine polymérique externe.

Selon un autre exemple, si la couche comprenant un polyéthylène à résistance thermique accrue est une gaine polymérique intermédiaire entre la(les) nappe(s) d'armures et une couche polymérique (par exemple une couche anti-usure), l'extrusion de la couche serait typiquement réalisée sur l'ensemble au moins une nappe d'armures de traction / voute de pression / gaine polymérique interne d'étanchéité / éventuelle carcasse (les couches étant listées de l'extérieur vers l'intérieur, l'extrusion étant réalisée sur la couche extérieure de cet ensemble, c'est-à-dire sur la voute de pression), pour obtenir un ensemble (gaine polymérique intermédiaire comprenant un polyéthylène à résistance thermique accrue / au moins une nappe d'armures de traction / voute de pression / gaine polymérique interne d'étanchéité / éventuelle carcasse) qui sera alors rapporté et calandré avec une gaine polymérique externe.

Dans un second mode de réalisation de cette seconde alternative, le procédé de préparation de la conduite flexible comprend l'étape de :
a) extrusion pour former une couche comprenant un polyéthylène à résistance thermique accrue, l'extrusion étant réalisée sur une autre couche.

Par exemple, lorsque la couche comprenant un polyéthylène à résistance thermique accrue est la gaine polymérique externe d'étanchéité, l'extrusion est typiquement réalisée sur un ensemble de couches : au moins une nappe d'armures de traction (généralement deux nappes d'armures) / voûte de pression / gaine polymérique interne d'étanchéité / éventuellement carcasse (les couches étant listées de l'extérieur vers l'intérieur, l'extrusion étant réalisée sur la couche extérieure de cet ensemble, c'est-à-dire sur une nappe d'armures de traction).

Selon un troisième objet, l'invention a pour objet une conduite flexible sous marine susceptible d'être obtenue par le procédé précité.

Selon un quatrième objet, l'invention a pour objet l'utilisation de la conduite flexible sous marine précitée pour le transport d'hydrocarbures.

Selon un cinquième objet, l'invention a pour objet l'utilisation d'un polyéthylène à résistance thermique accrue tel que défini ci-dessus dans une couche d'une conduite flexible sous marine destinée au transport de d'hydrocarbures pour augmenter la résistance de ladite couche au cloquage.

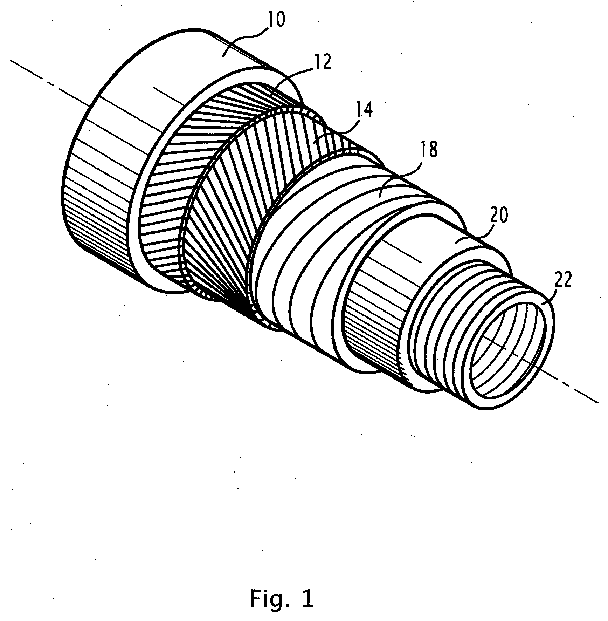

D'autres particularités et avantages de l'invention ressortiront à la lecture de la description faite ci-après de modes de réalisation particuliers de l'invention, donnés à titre indicatif mais non limitatif, en référence à la figure.

La figure est une vue schématique partielle en perspective d'une conduite flexible selon l'invention. Elle illustre une conduite conforme à l'invention comprenant, de l'extérieur vers l'intérieur :
- une gaine polymérique externe d'étanchéité 10,
- une nappe externe d'armures de traction 12,
- une nappe interne d'armures de traction 14 enroulée en sens opposé de la nappe externe 12,
- une voûte de pression 18 de reprise des efforts radiaux générés par la pression des hydrocarbures transportés,
- une gaine polymérique interne d'étanchéité 20, et
- une carcasse interne 22 de reprise des efforts radiaux d'écrasement.
Aucune gaine polymérique intermédiaire n'est représentée sur la figure. Comme explicité ci-dessus, on ne sortirait pas du champ de présente invention si la conduite comprenait une ou plusieurs gaine(s) polymérique(s) intermédiaire(s). Lorsqu'aucune gaine polymérique intermédiaire n'est présente dans la conduite, comme celle représentée à la figure, c'est (ce sont) la gaine polymérique externe d'étanchéité 10 et/ou la gaine polymérique interne d'étanchéité 20 qui comprend(ennent) un polyéthylène à résistance thermique accrue.

Du fait de la présence de la carcasse interne 22, cette conduite est dite à passage non lisse ("rough-bore" en langue anglaise). L'invention pourrait aussi s'appliquer à une conduite dite à passage lisse ("smooth-bore" en langue anglaise), ne comportant pas de carcasse interne.

De même, on ne sortirait pas du champ de la présente invention en supprimant la voûte de pression 18, sous réserve que les angles d'hélice des fils constituant les nappes d'armures 12, 14 soient proches de 55° et en sens opposé.

Les nappes d'armures 12, 14 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la figure, seules deux nappes d'armures 12 et 14 sont représentées, mais la conduite pourrait aussi comporter une ou plusieurs paires supplémentaires d'armures. La nappe d'armures 12 est dite externe car elle est ici la dernière, en partant de l'intérieur de la conduite, avant la gaine d'étanchéité externe 10.

La conduite flexible peut également comprendre des couches non représentées sur la figure, telles que :
- une couche de maintien entre la gaine polymérique externe 10 et les nappes d'armures de traction 12 et 14, ou entre deux nappes d'armures de traction,
- une ou plusieurs couches anti-usure (" anti-wear layer " en anglais) en matériau polymérique en contact soit avec la face interne de la couche de maintien précitée, soit avec sa face externe, soit avec les deux faces.

### EXEMPLE : Test de résistance au cloquage

Des tests de résistance au cloquage selon la norme API17J ont été réalisés sur des échantillons de PE-RT cités précédemment (Dow 2377, RT70) soumis 20 fois à une température de 90°C sous une pression de 250 bars en ayant été saturés dans du diesel (liquide de référence pour les tests) sans montrer aucun cloquage (observation à l'oeil nu puis au microscope optique (binoculaire LEICA MZ 125)).

A titre comparatif, les limites des matériaux polyéthylène (Finathene^{®} 3802 (Petrofina)) et polyéthylène réticulé (Crossflex® (Technip)) utilisés dans des applications de conduites flexibles à cause du phénomène de cloquage sont respectivement de :
- température de 60°C et pression de 105 bars en présence d'hydrocarbures liquides, ou de 210 bars en présence de gaz sec uniquement, ou
- température de 90°C et pression de 175 bars en présence d'hydrocarbures liquides.

Ainsi l'utilisation de polyéthylène à résistance accrue en tant que gaine d'étanchéité permet :
- pour une température de 60°C d'augmenter la plage d'utilisation en pression par rapport au polyéthylène utilisé actuellement,
- pour des températures supérieures à 60°C, c'est-à-dire dans des plages de température jusque là réservées au polyéthylène réticulé, d'augmenter la plage d'utilisation en pression par rapport au polyéthylène réticulé.

D'autres tests de résistance au cloquage selon la norme API17J ont été réalisés sur des échantillons de 7 mm d'épaisseur de PE-RT cités précédemment (Total Petrochemical XSene XRT70) soumis 20 fois à une température de 90°C sous une pression de 300 bars sans montrer aucun cloquage (observation à l'oeil nu puis au microscope optique (binoculaire LEICA MZ 125)).
Un matériau polyéthylène réticulé (Crossflex^{®} (Technip)) a été soumis aux mêmes conditions. De nombreuses cloques sont apparues.

D'autres tests de résistance au cloquage selon la norme API17J ont été réalisés sur des échantillons de 7 mm d'épaisseur de PE-RT de natures différentes soumis 20 fois à une température et une pression données. Les caractéristiques des PE-RT et les résultats de résistance au phénomène de cloquage sont fournis dans le tableau qui suit.

**Tableau : Caractéristiques des PE-RT utilisés et résultats des tests de résistance au cloquage.**

| Grade | Dowlex 2344 | Dowlex 2388 | XRT 70 |
|---|---|---|---|
| Fournisseur | Dow Chemical | Dow Chemical | Total Petrochem |
| Co-monomère | Octène C8 | Octène C8 | Hexène C6 |
| Type selon ISO 15494-1 | I | II | II |
| Densité (g/cm³) | 0,933 | 0,941 | 0,947 |
| Melt index (190°C) | 0,7g/10 min (2,16kg) 2,2g/10 min (5kg) | 0,54g/10min (2,16kg) 1,9g/10 min (5kg) | 0,7g/10 min (5kg) |
| Force de traction au seuil (MPa) | 16,5 | 20 | 23 |
| Résistance à la rupture par traction (MPa) | 34 | 37 | |
| Allongement à la rupture (%) | >800 | 780 | ≥350 |
| Module de flexion (MPa) | 550 (580 rigide) | 660 | 750 850 (rigide) |
| Phénomène de cloquage | Apparition de cloques à une pression de 250 bars et une température de 90°C | Apparition de cloques à une pression de 300 bars et une température de 90°C | Pas de cloques observées à une pression de 400 bars et une température de 90°C |

Ces résultats montrent qu'un PE-RT dont la densité est supérieure à 0,945 g/cm³ et dont le melt index mesuré à 190°C sous une masse de 5,0 kg est inférieur à 2,0 g/10 min (PE-RT XRT 70) résiste mieux au phénomène de cloquage qu'un PE-RT ne présentant pas ces caractéristiques (PE-RT Dowlex de densités inférieures à 0,945 g/cm³).

## Revendications

1. Conduite flexible sous marine destinée au transport d'hydrocarbures, comprenant une pluralité de couches dont au moins une couche comprend un polyéthylène à résistance thermique accrue dont le melt index mesuré à 190°C sous une masse de 5,0 kg est inférieur à 2,0 g/10 min et dont la densité est supérieure à 0,945 g/cm³_{.}

2. Conduite flexible sous marine selon la revendication 1, dans laquelle le melt index mesuré à 190°C du polyéthylène à résistance thermique accrue est :
- inférieur à 1,0 g/10 min sous une masse de 5,0 kg, et/ou
- inférieur à 0,25 g/10 min sous une masse de 2,16 kg, et/ou
- inférieur à 20 g/10 min sous une masse de 21,6 kg.

3. Conduite flexible sous marine selon la revendication 1 ou 2, dans laquelle le polyéthylène à résistance thermique accrue est obtenu par polymérisation d'éthylène et d'une α-oléfine choisie parmi le 1-butène, 1-hexène et le 1-octène, de préférence le 1-hexène et le 1-octène.

4. Conduite flexible sous marine selon l'une quelconque des revendications 1 à 3, dans laquelle le polyéthylène à résistance thermique accrue a :
- une force de traction au seuil comprise entre 15 et 35 MPa, préférentiellement entre 20 et 30 MPa et encore plus préférentiellement entre 25 et 30 MPa,
- un allongement à la rupture au moins supérieur à 50%, de manière préférentielle supérieure à 300% et de manière encore plus préférentielle supérieure ou égale à 500%.

5. Conduite flexible sous marine selon l'une quelconque des revendications 1 à 4, dont au moins une couche comprend le polyéthylène à résistance thermique accrue et une autre polyoléfine.

6. Conduite flexible sous marine selon la revendication 5, dans laquelle, dans la couche comprenant le polyéthylène à résistance thermique accrue et une autre polyoléfine, le rapport massique entre le polyéthylène à résistance thermique accrue et la somme du polyéthylène à résistance thermique accrue et de la polyoléfine est supérieur à 50%.

7. Conduite flexible sous marine selon la revendication 5, dans laquelle, dans la couche comprenant le polyéthylène à résistance thermique accrue et une autre polyoléfine, le rapport massique entre le polyéthylène à résistance thermique accrue et la somme du polyéthylène à résistance thermique accrue et de la polyoléfine est inférieur à 50%.

8. Conduite flexible sous marine selon l'une quelconque des revendications 5 à 7, dans laquelle l'autre polyoléfine est un polyéthylène à haut poids moléculaire, typiquement à très haut poids moléculaire, de préférence à ultra haut poids moléculaire.

9. Conduite flexible sous marine selon l'une quelconque des revendications 1 à 8, comprenant, de l'extérieur vers l'intérieur :
- une gaine polymérique externe d'étanchéité,
- au moins une nappe d'armures de traction,
- une voûte de pression,
- une gaine polymérique interne d'étanchéité,
- éventuellement une carcasse métallique,
et éventuellement une ou plusieurs gaine(s) polymérique(s) intermédiaire(s) d'étanchéité entre deux couches adjacentes,
étant entendu qu'au moins l'une de ces couches comprend le polyéthylène à résistance thermique accrue.

10. Conduite flexible sous marine selon l'une quelconque des revendications 1 à 9, dans laquelle la(es) couche(s) comprenant le polyéthylènes à résistance thermique accrue est(sont) :
- la gaine polymérique interne d'étanchéité, et/ou
- une ou plusieurs gaine(s) polymérique(s) intermédiaire(s) d'étanchéité située(s) entre deux couches adjacentes, et/ou
- la gaine polymérique externe d'étanchéité.

11. Procédé de préparation de la conduite flexible sous marine selon l'une quelconque des revendications 1 à 10, comprenant les étapes suivantes :
a) extrusion pour former une couche comprenant un polyéthylène à résistance thermique accrue dont le melt index mesuré à 190°C sous une masse de 5,0 kg est inférieur à 2,0 g/10 min et dont la densité est supérieure à 0,945 g/cm³, l'extrusion étant éventuellement réalisée sur une autre couche,
b) éventuellement assemblage de la couche obtenue à l'étape a) avec au moins une autre couche.

12. Utilisation d'une conduite flexible sous marine selon l'une quelconque des revendications 1 à 10 pour le transport d'hydrocarbures.

13. Utilisation d'un polyéthylène à résistance thermique accrue dont le melt index mesuré à 190°C sous une masse de 5,0 kg est inférieur à 2,0 g/10 min et dont la densité est supérieure à 0,945 g/cm³ dans une couche d'une conduite flexible sous marine destinée au transport de d'hydrocarbures pour augmenter la résistance de ladite couche au cloquage.

## Patentansprüche

1. Flexible Unterwasserrohrleitung für den Transport von Kohlenwasserstoffen, umfassend eine Vielzahl von Schichten, von denen mindestens eine Schicht ein Polyethylen mit erhöhter thermischer Widerstandfähigkeit umfasst, dessen Schmelzindex, gemessen bei 190 °C unter einer Masse von 5,0 kg, kleiner ist als 2,0 g/10 min und dessen Dichte höher ist als 0,945 g/cm³.

2. Flexible Unterwasserrohrleitung gemäß Anspruch 1, wobei der Schmelzindex des Polyethylens mit erhöhter thermischer Widerstandfähigkeit, gemessen bei 190 °C:
- kleiner als 1,0 g/10 min unter einer Masse von 5,0 kg, und/oder
- kleiner als 0,25 g/10 min unter einer Masse von 2,16 kg, und/oder
- kleiner als 20 g/10 min unter einer Masse von 21,6 kg
ist.

3. Flexible Unterwasserrohrleitung gemäß Anspruch 1 oder 2, wobei das Polyethylen mit erhöhter thermischer Widerstandfähigkeit durch Polymerisation von Ethylen und einem α-Olefin ausgewählt aus 1-Buten, 1-Hexen und 1-Octen, vorzugsweise 1-Hexen und 1-Octen erhalten wird.

4. Flexible Unterwasserrohrleitung gemäß einem der Anspruch 1 bis 3, wobei das Polyethylen mit erhöhter thermischer Widerstandfähigkeit:
- eine Mindestzugkraft zwischen 15 und 35 MPa, vorzugsweise zwischen 20 und 30 MPa und noch bevorzugter zwischen 25 und 30 MPa,
- eine Reißdehnung von mindestens höher als 50 %, vorzugsweise höher als 300 % und noch bevorzugter höher als oder gleich 500 %
hat.

5. Flexible Unterwasserrohrleitung gemäß einem der Ansprüche 1 bis 4, deren mindestens eine Schicht das Polyethylen mit erhöhter thermischer Widerstandfähigkeit und ein anderes Polyolefin umfasst.

6. Flexible Unterwasserrohrleitung gemäß Anspruch 5, wobei das Massenverhältnis zwischen dem Polyethylen mit erhöhter thermischer Widerstandfähigkeit und der Summe des Polyethylens mit erhöhter thermischer Widerstandfähigkeit und des Polyolefins in der Schicht umfassend das Polyethylen mit erhöhter thermischer Widerstandfähigkeit und ein anderes Polyolefin höher als 50 % ist.

7. Flexible Unterwasserrohrleitung gemäß Anspruch 5, wobei das Massenverhältnis zwischen dem Polyethylen mit erhöhter thermischer Widerstandfähigkeit und der Summe des Polyethylens mit erhöhter thermischer Widerstandfähigkeit und des Polyolefins in der Schicht umfassend das Polyethylen mit erhöhter thermischer Widerstandfähigkeit und ein anderes Polyolefin geringer als 50 % ist.

8. Flexible Unterwasserrohrleitung gemäß einem der Ansprüche 5 bis 7, wobei das andere Polyolefin ein hochmolekulares, typischerweise ein sehr hochmolekulares, vorzugsweise ein ultra-hochmolekulares Polyethylen ist.

9. Flexible Unterwasserrohrleitung gemäß einem der Ansprüche 1 bis 8, umfassend, von außen nach innen:
- einen äußeren polymeren Abdichtungsmantel,
- mindestens einen Zugarmierungsüberzug,
- ein Druckgewölbe,
- einen inneren polymeren Abdichtungsmantel,
- gegebenenfalls ein metallisches Gehäuse,
und gegebenenfalls einen oder mehrere polymere Zwischenabdichtungsmäntel zwischen zwei benachbarten Schichten,
wobei mindestens eine dieser Schichten das Polyethylen mit erhöhter thermischer Widerstandfähigkeit umfasst.

10. Flexible Unterwasserrohrleitung gemäß einem der Ansprüche 1 bis 9, wobei die Schicht(en) umfassend das Polyethylen mit erhöhter thermischer Widerstandfähigkeit:
- der innere polymere Abdichtungsmantel, und/oder
- ein oder mehrere polymere, zwischen zwei benachbarten Schichten gelegene Zwischenabdichtungsmäntel, und/oder
- der äußere polymere Abdichtungsmantel
ist/sind.

11. Verfahren zur Herstellung der flexiblen Unterwasserrohrleitung gemäß einem der Ansprüche 1 bis 10, umfassend die folgenden Schritte:
a) Extrusion, um eine Schicht umfassend ein Polyethylen mit erhöhter thermischer Widerstandfähigkeit auszubilden, dessen Schmelzindex, gemessen bei 190 °C unter einer Masse von 5,0 kg, kleiner ist als 2,0 g/10 min und dessen Dichte höher ist als 0,945 g/cm³, wobei die Extrusion gegebenenfalls auf einer anderen Schicht vollzogen wird,
b) gegebenenfalls Zusammenfügen der in Schritt a) erhaltenen Schicht mit mindestens einer anderen Schicht.

12. Verwendung einer flexiblen Unterwasserrohrleitung gemäß einem der Ansprüche 1 bis 10 für den Transport von Kohlenwasserstoffen.

13. Verwendung eines Polyethylens mit erhöhter thermischer Widerstandfähigkeit, dessen Schmelzindex, gemessen bei 190 °C unter einer Masse von 5,0 kg, kleiner ist als 2,0 g/10 min und dessen Dichte höher ist als 0,945 g/cm³, in einer Schicht einer flexiblen Unterwasserrohrleitung für den Transport von Kohlenwasserstoffen zur Verstärkung des Resistenz der Schicht gegenüber Blasenbildung.

## Claims

1. A flexible underwater pipe intended for transporting hydrocarbons, comprising a plurality of layers, at least one layer of which comprises a polyethylene with enhanced heat resistance for which the melt index measured at 190°C under a mass of 5.0 kg is less than 2.0 g/10 min and for which the density is greater than 0.945 g/cm³.

2. The flexible underwater pipe according to claim 1, wherein the melt index measured at 190°C of the polyethylene with enhanced heat resistance is:
- less than 1.0 g/10 min under a mass of 5.0 kg, and/or
- less than 0.25 g/10 min under a mass of 2.16 kg, and/or
- less than 20 g/10 min under a mass of 21.6 kg.

3. The flexible underwater pipe according to claim 1 or 2, wherein the polyethylene with enhanced heat resistance is obtained by polymerization of ethylene and of an α-olefin selected from 1-butene, 1-hexene and 1-octene, preferably 1-hexene and 1-octene.

4. The flexible underwater pipe according to any of claims 1 to 3, wherein the polyethylene with enhanced heat resistance has:
- a threshold yield strength comprised between 15 and 35 MPa, preferentially between 20 and 30 MPa and even more preferentially between 25 and 30 MPa,
- an elongation at break at least greater than 50%, preferentially greater than 300% and even more preferentially greater than or equal to 500%.

5. The flexible underwater pipe according to any of claims 1 to 4, at least one layer of which comprises the polyethylene with enhanced heat resistance and another polyolefin.

6. The flexible underwater pipe according to claim 5, wherein, in the layer comprising the polyethylene with enhanced heat resistance and another polyolefin, the mass ratio between the polyethylene with enhanced heat resistance and the sum of the polyethylene with enhanced heat resistance and of the polyolefin is greater than 50%.

7. The flexible underwater pipe according to claim 5, wherein, in the layer comprising the polyethylene with enhanced heat resistance and another polyolefin, the mass ratio between the polyethylene with enhanced heat resistance and the sum of the polyethylene with enhanced heat resistance and of the polyolefin is less than 50%.

8. The flexible underwater pipe according to any of claims 5 to 7, wherein the other polyolefin is a high molecular weight polyethylene, typically very high molecular weight polyethylene, preferably ultra high molecular weight polyethylene.

9. The flexible underwater pipe according to any of claims 1 to 8, comprising, from the outside to the inside:
- an external polymeric sealing sheath,
- at least one ply of tensile armors,
- a pressure vault,
- an internal polymeric sealing sheath,
- optionally a metal carcass,
and optionally one or several intermediate polymeric sealing sheaths between two adjacent layers,
provided that at least one of these layers comprises the polyethylene with enhanced heat resistance.

10. The flexible underwater pipe according to any of claims 1 to 9, wherein said layer(s) comprising the polyethylene with enhanced heat resistance is(are):
- the internal polymeric sealing sheath, and/or
- one or several intermediate polymeric sealing sheaths located between two adjacent layers, and/or
- the external polymeric sealing sheath.

11. A method for preparing the flexible underwater pipe according to any of claims 1 to 10, comprising the following steps:
a) extrusion for forming a layer comprising a polyethylene with enhanced heat resistance for which the melt index measured at 190°C under a mass of 5.0 kg is less than 2.0 g/10 min and for which the density is greater than 0.945 g/cm³, the extrusion being optionally carried out on another layer,
b) optionally assembling the layer obtained in step a) with at least one other layer.

12. The use of a flexible underwater pipe according to any of claims 1 to 10 for transporting hydrocarbons.

13. The use of a polyethylene with enhanced heat resistance, for which the melt index measured at 190°C under a mass of 5.0 kg is less than 2.0 g/10 min and for which the density is greater than 0.945 g/cm³ in a layer of a flexible underwater pipe intended for transporting hydrocarbons in order to increase the resistance of said layer to blistering.
